Europäisches Patentamt

(19) European Patent Office

Office européen des brevets

(11) Numéro de publication : **0 073 164**
**B1**

(12) **FASCICULE DE BREVET EUROPÉEN**

(45) Date de publication du fascicule du brevet :
21.11.85

(51) Int. Cl.⁴ : **H 04 B   9/00**

(21) Numéro de dépôt : **82401486.4**

(22) Date de dépôt : **05.08.82**

(54) Système émetteur-récepteur de transmission numérique par voie optique et à débit variable.

(30) Priorité : **21.08.81 FR 8116121**

(43) Date de publication de la demande :
**02.03.83 Bulletin 83/09**

(45) Mention de la délivrance du brevet :
**21.11.85 Bulletin 85/47**

(84) Etats contractants désignés :
**DE GB**

(56) Documents cités :
FR-A- 2 253 336
FR-A- 2 333 387
US-A- 3 509 279

(73) Titulaire : **THOMSON-CSF**
**173, Boulevard Haussmann**
**F-75379 Paris Cedex 08 (FR)**

(72) Inventeur : **Eumurian, Grégoire**
**THOMSON-CSF SCPI 173, bld Haussmann**
**F-75379 Paris Cedex 08 (FR)**
Inventeur : **Gadrault, Robert**
**THOMSON-CSF SCPI 173, bld Haussmann**
**F-75379 Paris Cedex 08 (FR)**

(74) Mandataire : **Trocellier, Roger et al**
**THOMSON-CSF SCPI 173, Bld Haussmann**
**F-75379 Paris Cedex 08 (FR)**

## 0 073 164

**Description**

La présente invention concerne un système émetteur-récepteur de transmission numérique par voie optique et à débit variable.

L'utilisation conjuguée de fibres optiques, d'émetteurs optiques rapides et de récepteurs optiques permet d'obtenir des liaisons à large bande allant de quelques dizaines de mégahertz à plus d'un gigahertz.

Les liaisons optiques présentent par rapport aux liaisons électriques, l'avantage d'un isolement galvanique et d'une bande passante étendue, et l'inconvénient d'une fonction de transfert pouvant varier sensiblement au cours d'exploitation surtout dans un environnement sévère. En effet, les connecteurs optiques sont extrêmement sensibles aux tolérances mécaniques et à la poussière.

Par ailleurs, les fibres optiques modifient leur fonction de transfert sous l'action éventuelle des radiations nucléaires. A ces variations, provoquées par la fibre, viennent s'ajouter les modifications produites par les éléments d'émission et de réception. L'élément d'émission peut être un laser solide ou une diode électroluminescente et dans les deux cas la pente de conversion courant-puissance optique qui caractérise ces éléments varie en fonction de la température et du vieillissement.

La réception optique peut être réalisée au moyen de diode PIN ou à avalanche. Les diodes PIN sont stables en fonction de la température et de la tension de polarisation. Les photodiodes à avalanche, qui présentent une sensibilité environ cent fois plus grande à la lumière, sont en revanche très sensibles aux variations de température et de tension.

A ces différentes causes de variations vient s'ajouter, lorsque le système comporte plusieurs liaisons optiques, la dispersion des caractéristiques de chaque sous-ensemble.

L'information sous forme numérique à transmettre sur la fibre optique est obtenue en utilisant différents procédés de codage : modulation d'amplitude de la puissance lumineuse, modulation de fréquence ou de phase et modulation numérique. Dans le cas de la modulation d'amplitude, il est indispensable de connaître avec précision les différentes pertes afin de rétablir à la réception, et en jouant sur le gain, le niveau correct. Dans le cas de la modulation de fréquence, de phase et des modulations numériques, il est nécessaire de rétablir le niveau de manière approchée, la dynamique des systèmes de traitement, quoique limitée, pouvant accepter certaines variations de niveau.

Les transmissions numériques présentent en particulier une bonne tolérance aux modifications de la fonction de transfert ainsi qu'au niveau du bruit, ceci toutefois aux prix d'une bande passante plus large.

Les transmissions numériques optiques présentent, par rapport aux transmissions électriques classiques, l'avantage d'une bande passante plus large (pouvant atteindre plusieurs centaines de megabits sur plusieurs kilomètres) et une insensibilité aux parasites électromagnétiques. Cependant l'insensibilité aux modifications de la fonction de transfert doit être beaucoup plus grande et compte tenu de la difficulté à transmettre des fréquences allant jusqu'au continu, il est nécessaire d'utiliser des codes n'ayant pas de composantes vers le bas du spectre. Cette limitation des liaisons optiques vers les fréquences basses est causée essentiellement par le courant d'obscurité des photodiodes dont la valeur double tous les 8 °C environ et devient rapidement plus important que le signal, surtout pour des liaisons présentant une forte atténuation.

La difficulté à réaliser un amplificateur large bande, passant le continu, s'ajoute à celle précitée. Pour ces différentes raisons, il est quasiment nécessaire d'utiliser un code de transmission à composante continue nulle ou constante.

Compte tenu de la diversité des codes utilisés actuellement, une liaison qui ne pourrait transmettre qu'un code spécifique serait, par voie de conséquence, d'une utilisation limitée. Un système de transmission universel permet en revanche, moyennant un premier procédé de transcodage (code externe utilisateur, code interne) précédant l'émetteur optique et un second procédé de transcodage (code interne — code externe utilisateur) suivant le récepteur optique, transmettre tous les codes quelle que soit leur forme. La durée de chaque bit peut être comprise entre une valeur minimale (fonction de la bande passante du système) et une valeur très élevée, le système de transmission fonctionnant ainsi comme un système transparent, ou système à débit variable compris entre 0 et un débit maximal, par exemple 0 à 10 MB/s.

L'utilisation du code interne présente, en dehors de la possibilité d'accepter un code externe quelconque, l'avantage de permettre l'optimisation de ce code interne en fonction des propriétés spécifiques d'un système de transmission optique sans tenir compte des contraintes du code externe, ou code utilisateur.

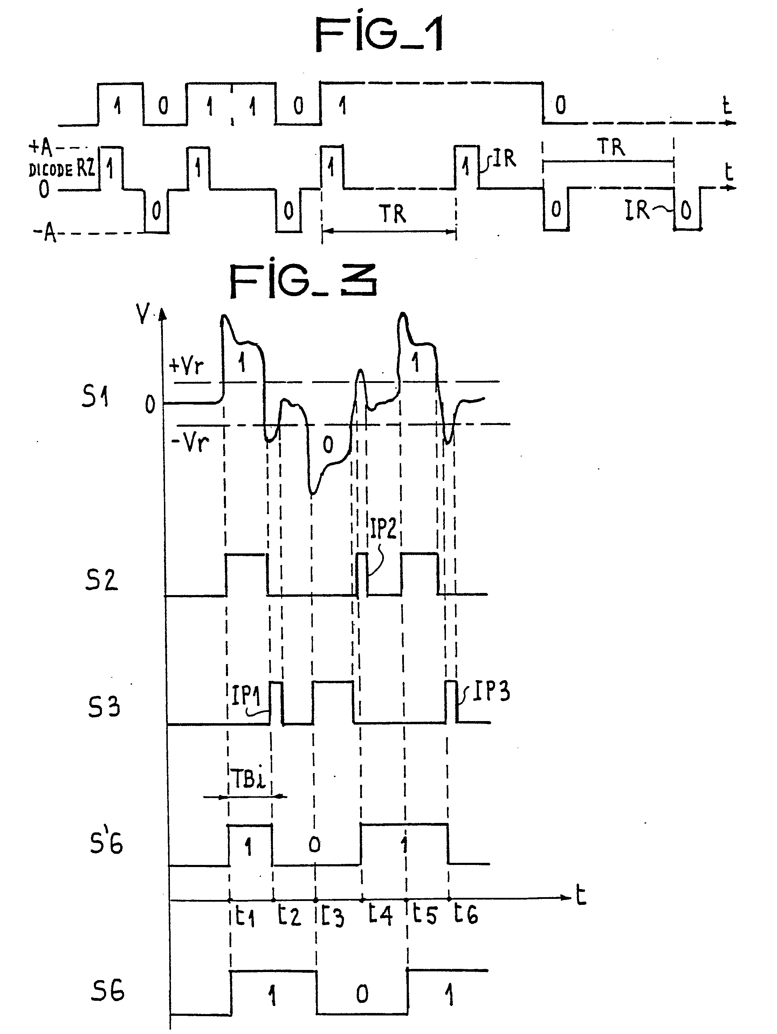

Le code interne retenu est un code à trois niveaux à valeur moyenne constante. Un code de ce type est celui dénommé dicode retour à zéro, ou dicode RZ (en terminologie anglo-saxone PBP code, abréviation de Pulse Bi-Polar code), il peut être comparé à une différenciation du code d'entrée. Ainsi, on ne code que les transitions (Fig. 1) ; une impulsion positive correspond à une transition 0-1, et une impulsion négative à une transition 1-0, (ou l'inverse). L'amplitude et la durée de chacune de ces impulsions sont identiques. La durée est choisie de préférence sensiblement égale à la moitié de la durée la plus faible (cadence maximale) du code externe. Comme on peut le constater, ce code présente une valeur moyenne constante. Ce code accepte parfaitement des bits de durée, allant jusqu'à l'infini.

2

Toutefois, pour se protéger contre les parasites, si un bit 1 ou 0 du code externe dure un temps supérieur à valeur prédéterminée TR (qui peut être choisie égale à plusieurs centaines de fois la durée de bit minimale, de manière à maintenir la valeur moyenne sensiblement constante), on produit automatiquement une impulsion de rafraîchissement IR correspondant à l'état précédent. Si le code d'entrée continue à rester dans le même état, une impulsion de rafraîchissement est ainsi produite automatiquement toutes les périodes TR.

Suivant une réalisation connue utilisant un tel code à trois niveaux, décrite notamment dans le document de brevet FR-A-2 333 387, le signal optique délivré par l'émetteur est codé dicode RZ et acheminé le long d'un conducteur optique à fibre vers le récepteur. Celui-ci se compose d'une photodiode d'entrée connectée à un montage transimpédance groupant un amplificateur opérationnel et une résistance. La sortie de ce montage est traitée dans un circuit de commande automatique de gain dit CAG comprenant un amplificateur à gain variable contrôlé à partir de sa sortie à travers un filtre passebas. Le gain varie donc en fonction de la composante continue. La sortie du CAG est ensuite transmise vers deux comparateurs à seuils fixes et symétriques pour détecter l'un, les impulsions 1 et l'autre, les impulsions 0 du signal. Une bascule RS assure ensuite le transcodage pour récupérer l'information sous forme binaire NRZ.

Ce montage présente divers inconvénients. La chaîne de réception jusqu'au comparateur doit obligatoirement fonctionner en liaison continue, ce qui entraîne un fonctionnement dans une gamme de température limitée, à cause de la variation du courant obscurité de la photodiode et des difficultés de réalisation des amplificateurs. Par ailleurs, un amplificateur à CAG à large bande présente souvent une distorsion en fonction du niveau du signal d'entrée (déformation du signal et modification de sa réponse en fréquence).

Afin de remédier aux inconvénients de telles réalisations connues, le système de transmission peut être aménagé selon la solution décrite dans la demande de brevet N° 81.15599 déposée le 12 août 1981, publiée le 18 février 1983 sous le N° 2 511 566 (= EP-A-0 072 290, publiée le 16 février 1983), et qui est rappelée dans ce qui suit.

Suivant cette solution, le récepteur optique est entièrement réalisé en liaison alternative pour permettre un fonctionnement dans une large gamme de température et éviter l'utilisation d'amplificateur passant la composante continue. Par ailleurs, l'amplificateur à CAG, de réalisation délicate, est remplacé par un circuit où les valeurs des seuils des comparateurs varient en fonction du niveau du signal reçu.

Suivant la solution en question, le récepteur optique comporte une photodiode suivie d'un montage transimpédance où l'amplification présente une large bande passante située en dehors du continu ; la sortie de cet amplificateur est appliquée aux comparateurs symétriques à travers une liaison capacitive. Un circuit générateur des seuils de comparaison, alimenté par la sortie du condensateur de liaison, permet de faire varier les seuils parmi une pluralité de valeurs discrètes prédéterminées pour couvrir une large dynamique du signal.

Dans le cas d'une seule commutation des seuils de référence, le générateur de seuils peut être réalisé selon une voie unique équipée d'une paire de comparateurs à seuils symétriques, d'une porte OU logique, d'un monostable et d'un circuit de commutation à transistors pour obtenir deux paires de valeurs de références ± Vr1 ± Vr2, selon l'amplitude du signal incident. Dans le cas d'une dynamique étendue, il est nécessaire de produire plus de deux couples de valeurs de référence pour couvrir la gamme de variation d'amplitude du signal ; pour deux commutations, c'est-à-dire trois valeurs ± Vr1, ± Vr2, ± Vr3, le générateur de seuil devra comporter deux voies du type indiqué, et ainsi de suite, le reste du récepteur étant inchangé.

L'augmentation du nombre de valeurs de la tension de référence est rendue obligatoire quand la dynamique d'entrée augmente par la nécessité d'adapter la référence Vr au niveau d'entrée. Par exemple, pour un signal d'entrée variable entre ± 10 mV à ± 1 V, la tension de référence peut être commutée une seule fois de ± 8 mV à ± 80 mV. Par contre, si le signal d'entrée continue à croître au-delà de ± 1 V, la référence haute ± 80 mV devient trop faible par rapport au signal. Si le signal atteint par exemple ± 10 V, une suroscillation de 1 % va être suffisante pour entraîner une commutation supplémentaire et donc un décodage erroné. La réalisation de la fonction de transfert produisant une suroscillation aussi faible est relativement difficile, surtout compte tenu des variations en température et par vieillissement. Il est donc nécessaire, dans l'exemple cité de commuter trois valeurs de référence au moins au prix d'une complexité croissante du circuit générateur de seuils.

Le but de l'invention est de remédier à ces inconvénients moyennant des aménagements apportés au récepteur et à l'émetteur de la liaison, pour s'affranchir des effets de suroscillations et étendre la dynamique d'entrée sans pratiquement accroître la complexité du système de transmission.

Suivant un objet de l'invention, il est réalisé un système émetteur-récepteur de transmission numérique par voie optique à débit variable dans lequel, l'émetteur optique produit des impulsions lumineuses répondant à un codage interne à trois niveaux et à composante continue constante de l'information à transmettre, le codage comportant également l'émission périodique d'une impulsion de rafraîchissement lorsque le signal codé reste inchangé pendant une période déterminée ; un conducteur à fibre optique achemine les impulsions lumineuses vers un récepteur optique ; le récepteur comporte, selon une solution préférée, un étage photodétecteur suivi d'un montage transimpédance qui alimente à travers une liaison capacitive deux comparateurs à seuils symétriques et un circuit générateur des seuils pour commuter automatiquement les seuils parmi une pluralité de valeurs discrètes prédéterminées, en fonction de l'amplitude du signal. Le récepteur est équipé en aval des comparateurs à seuil et avant transcodage, de moyens de protection contre des effets parasites de changement d'état résultant de suroscillations. L'émetteur est également aménagé de moyens de protection pour supprimer tout chevauchement éventuel d'une impulsion de rafraîchissement avec une impulsion du code interne de la liaison, le chevauchement produisant l'équivalent d'une impulsion avec suroscillations.

Les particularités de l'invention apparaîtront dans la description qui suit donnée à titre d'exemple non limitatif, à l'aide des figures annexées qui représentent :

la figure 1, des signaux rappelant un codage dicode RZ à partir d'une information binaire NRZ ;

la figure 2, un diagramme général d'un récepteur optique utilisé dans un système de transmission conforme à la présente invention ;

la figure 3, des signaux illustrant l'effet parasite des suroscillations qui altèrent l'information ;

la figure 4, un schéma partiel d'un exemple de réalisation d'un récepteur optique aménagé selon la figure 2 ;

la figure 5, des signaux illustrant la suppression de l'effet parasite des oscillations dans un récepteur aménagé selon l'invention ;

la figure 6, un diagramme général d'un émetteur optique utilisé dans un système de transmission conforme à l'invention ;

la figure 7, des signaux illustrant un cas de chevauchement d'une impulsion de rafraîchissement avec une impulsion du code et la suppression du chevauchement dans le cas d'un émetteur aménagé selon l'invention ;

la figure 8, un schéma d'un exemple de réalisation d'un émetteur optique aménagé selon la figure 6 ;

les figures 9, 10 et 11, des signaux illustrant le fonctionnement de l'émetteur selon la figure 8 respectivement, en l'absence et en présence d'impulsions de rafraîchissement et en cas de transition du code qui se produit pendant la durée d'une impulsion de rafraîchissement.

La figure 1 rappelle un codage dicode RZ à partir d'une information binaire. Le code binaire NRZ constitue le code externe, ou code exploitant, à transcoder à l'émission pour former le code interne désiré à trois niveaux et à composante continue constante. Le transcodage inverse à la réception permet de récupérer l'information binaire NRZ.

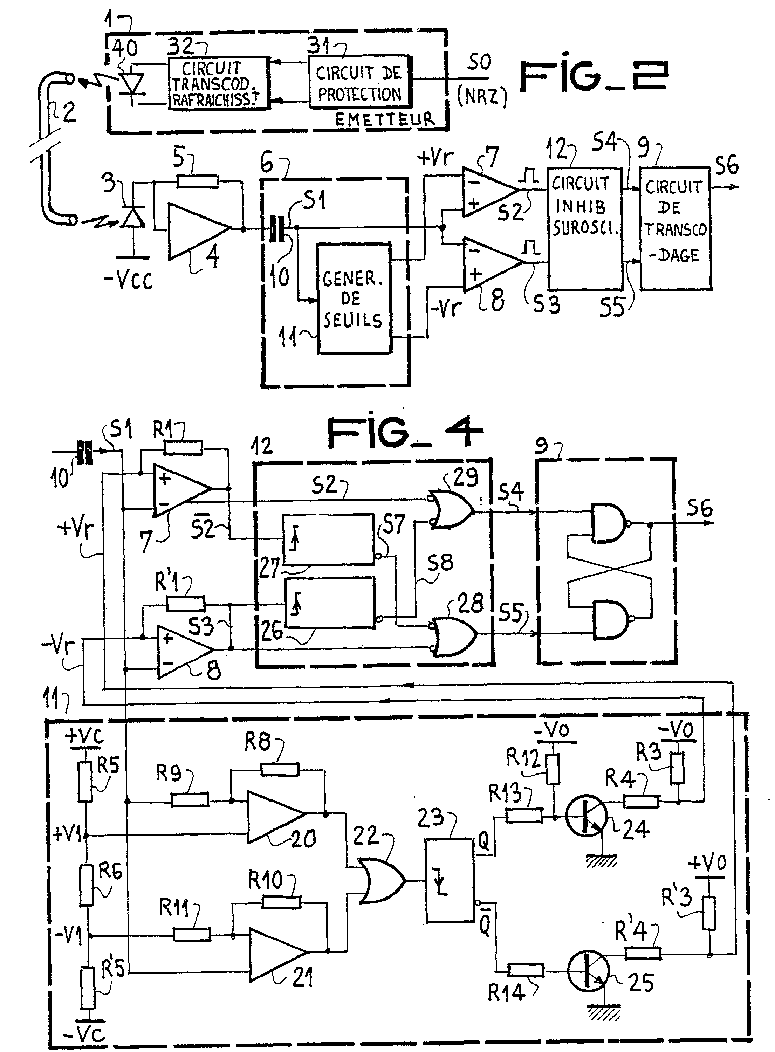

En se reportant à la figure 2, l'émetteur optique 1 du système de transmission numérique à débit variable, délivre le signal sous forme optique et codé selon un code à composante continue constante, codage dicode RZ par exemple. Les impulsions lumineuses sont acheminées à travers la fibre optique 2 vers le récepteur optique.

Le récepteur du type considéré se compose d'un étage photodétecteur d'entrée 3 qui peut consister en une photodiode PIN ou à avalanche et qui est suivi d'un montage transimpédance à amplificateur 4 et à résistance 5. Vient ensuite un circuit de traitement 6 qui précède les comparateurs symétriques 7 et 8 et la bascule RS de transcodage 9.

Le circuit de traitement 6 comporte d'une part, un condensateur 10 qui assure la liaison entre la sortie de l'amplificateur 4 et les comparateurs 7 et 8, et d'autre part, un circuit générateur 11 des seuils de comparaison. Le condensateur 10 élimine la composante continue et délivre le signal S1 qui se présente sous forme d'impulsions positives et négatives de même amplitude et durée. La sortie du condensateur 10 est également appliquée au circuit générateur de seuil 11 pour élaborer des valeurs de seuils symétriques en fonction de l'amplitude du signal. Un seul couple de valeurs de seuil, ou valeurs de référence, + Vr pour le comparateur 7, − Vr pour le comparateur 8, ne permet de couvrir qu'une plage de variation du signal limitée. En conséquence, le circuit 11 agit comme un organe de décision et permet, en fonction de l'évolution de l'amplitude du signal, de commuter les valeurs de seuils pour répondre à une dynamique élevée. La variation des seuils ou références, est discontinue, s'effectuant parmi une pluralité de valeurs discrètes prédéterminées ± Vr1, ± Vr2, ..., ± Vrn dont le nombre n est choisi en relation avec la dynamique à couvrir.

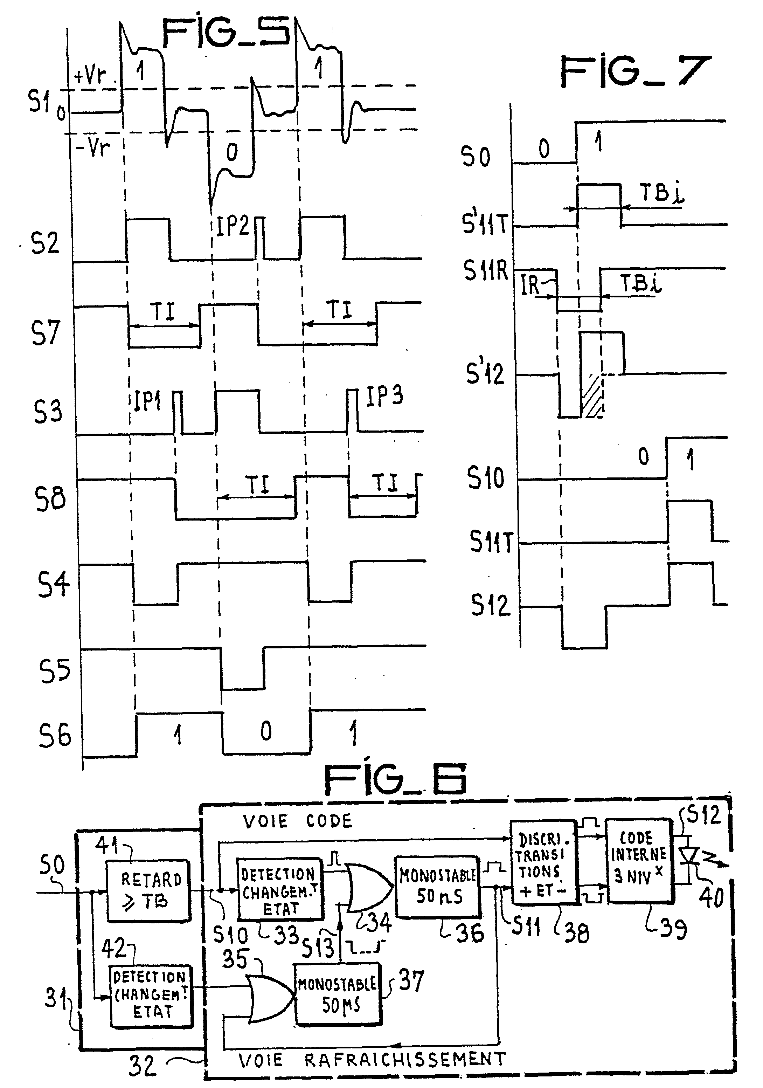

Conformément à l'invention, le récepteur comporte un circuit additionnel 12 disposé entre les comparateurs 7 et 8 et le circuit 9, et dont la fonction est de protéger le récepteur contre les effets parasites des suroscillations qui sont mis en évidence à l'aide de la figure 3. Des franchissements intempestifs de seuil dus aux suroscillations se produisent aux instants t2, t4 et t6. Il en résulte des impulsions parasites IP1, IP2 et IP3 en sortie des comparateurs 7-8. En l'absence des moyens 12 d'inhibition des suroscillations, on obtiendrait en sortie le signal S'6 erroné indiqué au lieu du signal vrai S6 correspondant à l'information S1.

Le circuit de protection, ou d'inhibition 12, empêche, pour chacune des commandes de la bascule de transcodage 9, une deuxième commande provoquée par un rebondissement pendant une durée préétablie. En désignant par TBm la durée de bit minimale du code externe (durée d'un digit 1 ou 0), le code interne est déterminé en sorte que la durée TBi d'impulsion 1 ou 0 de ce code est inférieure à la valeur TBm. La durée TBi pourra être choisie par exemple, égale approximativement à la moitié de la valeur TBm. La durée d'inhibition TI est déterminée pour couvrir la durée propre TBi des impulsions du code interne et celle du rebondissement qui peut se produire à la suite du front arrière de l'impulsion ; en outre, cette durée TI doit évidemment rester inférieure à la valeur TBm qui représente la durée minimale

4

séparant deux impulsions de polarité opposée du code interne, pour éviter de perdre l'information de transition de bits correspondant à la deuxième impulsion du code interne. La valeur TI d'inhibition peut finalement être définie comprise entre les valeurs TBi et TBm. A titre d'exemple, pour un débit maximal de 10 MB/s soit TBm = 100 ns, la valeur TBi peut être de 50 ns et TI de 75 ns environ.

La figure 4 a trait à une représentation détaillée du récepteur aménagé avec les circuits d'inhibition et dans le cas le plus simple de réalisation du circuit de décision 11 correspondant à une seule commutation des valeurs de référence ± Vr. Le récepteur est représenté à partir du condensateur 10. Les résistances R1, R'1 adjointes aux comparateurs 7 et 8 assurent en liaison avec les résistances des sources, des tensions de référence ± Vr, un niveau d'hystérésis qui est commuté en même temps que la valeur de référence permettant ainsi un fonctionnement proportionnel à faible et à fort niveaux. La bascule RS de transcodage est constituée de deux portes ET-NON rebouclées. Le circuit générateur de seuil 11 comporte une voie formée de deux comparateurs à seuil 20 et 21 où les impulsions positives ou négatives notées respectivement 1 et 0 du signal S1 issu du condensateur 10 sont comparées à des niveaux symétriques, + V1 et − V1 respectivement. Les sorties de comparaison sont appliquées à travers une porte OU 22 à un monostable redéclenchable 23. La sortie Q du monostable et sa sortie complémentaire Q̄ attaquent deux circuits de commutation à transistors 24 et 25 et résistances, pour obtenir la commutation des niveaux ± Vr de référence de ± Vo à ± Vo(R4/R3 + R4), ou l'inverse.

Le circuit de protection 12 est constitué de deux monostables 26 et 27 et deux portes ET-NON 28 et 29. Les monostables déclenchent sur le front avant des impulsions présentes sur les sorties des comparateurs à seuil 7 et 8, et ils fonctionnent pendant une durée correspondant à celle d'inhibition TI définie précédemment. Les portes 28 et 29 qui reçoivent respectivement une sortie de comparaison et une sortie de circuit monostable, permettent de bloquer les commandes de la bascule de transcodage 9 pendant une durée TI à chaque impulsion du code interne et ainsi, éliminer des déclenchements intempestifs dus à des suroscillations.

La figure 5 illustre le fonctionnement du récepteur ainsi équipé de moyens d'inhibition 12 et en présence de suroscillations donnant lieu aux impulsions parasites IP1 à IP3 (signaux S2, S3) détectés par les comparateurs 7 et 8. Le signal S6 restitué correspond bien à l'information transmise par la liaison.

Le fonctionnement de ce récepteur est correct pour des cadences d'émission moyennes ou élevées ne donnant pas lieu à émission d'impulsion de rafraîchissemnt IR (Fig. 1). Pour des cadences plus faibles, devenant inférieures à la cadence 1/TR de rafraîchissement, il existe un risque d'émission simultanée d'impulsion de rafraîchissement et d'impulsion normale du code interne. Dans ce cas, l'impulsion émise, qui comporte une impulsion positive immédiatement suivie d'une impulsion négative, ou vice et versa, est traitée par le récepteur comme une impulsion avec suroscillation. L'impulsion de code va être supprimée ce qui entraîne un mauvais fonctionnement au niveau du décodage. En effet, c'est cette deuxième partie du signal qui représente l'ordre de changement d'état et c'est justement cet ordre qui se trouve supprimé. Ce fonctionnement est illustré sur la figure 7 par les quatre premiers signaux, le signal S0 correspondant au code externe NRZ, le signal transcodé S'11T, une impulsion de rafraîchissement S11R qui chevauche la transition du code et le signal résultant S'12.

Pour assurer un fonctionnement correct, l'émetteur est doté d'un circuit complémentaire 31 qui élimine cette possibilité de chevauchement.

La figure 6 représente un tel émetteur où la partie 32 en aval du bloc 31 produit le transcodage désiré du code externe S0 en code interne S12 à trois niveaux. Dans une version non aménagée avec le moyen 31, l'émetteur consisterait en la partie 32 où la sortie du circuit de détection de changement d'état 33 du signal S0 alimenterait à la fois les deux portes OU 34 et 35. La détection de changement d'état se traduit par une impulsion à chaque transition 1-0 ou 0-1 du signal d'entrée. La porte OU 34 est suivie d'un monostable 36 de durée égale à celle TBi des impulsions du code interne, par exemple 50 ns, et la porte OU 35 est suivie d'un monostable redéclenchable 37 de durée égale à la période TR de rafraîchissement, par exemple 50 μs. La sortie S11 est appliquée à la deuxième entrée de la porte 35 et la sortie S13 du monostable 37 à la deuxième entrée de la porte 34. La sortie S13 est en permanence à l'état 0 tant que les transitions du code externe S0 se succèdent avec une période inférieure à TR. Si le code externe ne change pas pendant cette durée, le signal S13 passe à 1 entraînant via les circuits 34 et 36 la production d'une impulsion IR de rafraîchissement et, par l'intermédiaire du rebouclage 36 et 35 le redéclenchement du monostable 37 pour une nouvelle période TR. Ainsi, si le code externe S0 reste inchangé, l'ensemble 34 à 37 se comporte comme un oscillateur de période TR. La sortie du monostable 36, ainsi que le code externe attaquent un circuit de discrimination 38, ou d'identification, des transitions positives et des transitions négatives ; il présente à cet effet deux sorties, l'une délivrant une impulsion positive pour chaque transition de 0 à 1 du code externe, l'autre délivrant une impulsion négative pour chaque transition de 1 à 0 de ce même code.

Un circuit 39 permet ensuite de délivrer le code trois niveaux qui est appliqué à la diode d'émission 40 sous forme de trois courants Io (état de repos), Imin (transition de 1 à 0) et Imax (transition de 0 à 1). La valeur Io est égale à la valeur moyenne des valeurs extrêmes c'est-à-dire Imax-Io = Io-Imin. La durée des impulsions négative et positive est par ailleurs identique.

Le montage 32 de la figure 6 présente donc le risque de chevauchement entre le code interne et l'impulsion de rafraîchissement illustré sur la figure 7. Le rafraîchissement (S11R) débute juste avant la transition 0 à 1 (S'11T). A l'arrivée de cette transition, le rafraîchissement est abandonné au profit du

5

code, ce qui entraîne la création d'une impulsion négative tronquée suivie d'une impulsion positive normale (S'12). Dans le cas d'une coïncidence entre une transition du code externe de 1 à 0 et d'une impulsion de rafraîchissement, le signal tronqué est identique mais de polarité opposée. Pour éviter ces impulsions tronquées qui génèrent de faux codes au niveau du récepteur (effet semblable à celui des suroscillations), on introduit, selon l'invention, un retard dans la voie fabriquant le code trois niveaux par rapport à la voie de rafraîchissement (signaux S10, S11T et S12 de la figure 7).

La partie complémentaire 31 comporte donc, un circuit de retard 41 du signal S0 et un deuxième circuit détecteur de changement d'état 42 pour préserver l'alimentation de la porte OU 35 de la voie de rafraîchissement à partir de l'information S0 non retardée. Le retard introduit par le circuit 1 doit être supérieur ou au moins égal à la durée minimale TBm de bit du code externe.

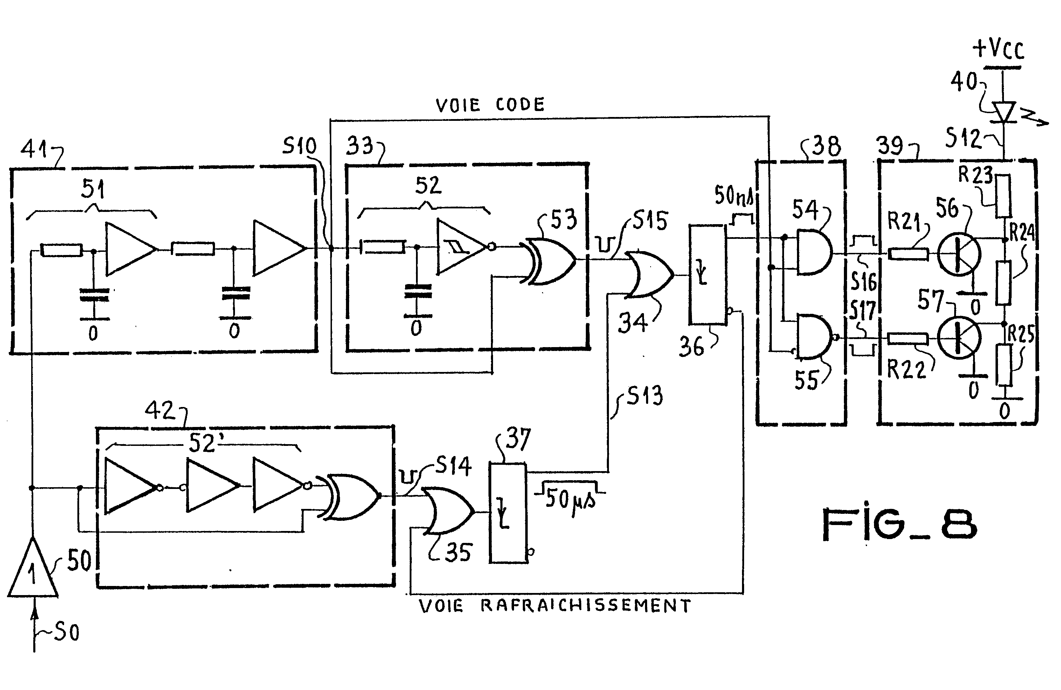

La figure 8 correspond au schéma détaillé d'un exemple de réalisation de l'émetteur ainsi aménagé.

Le circuit de retard 41 qui empêche le chevauchement entre l'impulsion de rafraîchissement et le code est réalisé à partir de deux cellules composées chacune, telle la cellule 51, d'un filtre passe-bas et d'un trigger de Schmitt. Ce circuit à retard est donné à titre indicatif, tout autre dispositif (ligne à retard, suite d'inverseurs logiques, etc.) pouvant convenir. Les circuits de détection des changements d'état 33 et 42 sont constitués de différenciateurs logiques comportant un circuit retard (composé d'un filtre passe-bas suivi d'un trigger de Schmitt 52 ou d'une série d'inverseurs logiques 52', ou tout autre montage pouvant convenir), associé à un circuit port OU exclusif tel 53. Ce dispositif fournit pour chaque transition 0 à 1, et 1 à 0, une impulsion de largeur égale au retard du circuit 52, par exemple 30 ns pour une valeur TBi de 50 ns. La discrimination des transitions positives ou négatives est réalisée par les portes 54 et 55 en combinant l'impulsion de sortie du monostable 36 avec le code d'entrée retardé S10. Ces portes délivrent des impulsions positives et négatives correspondant respectivement aux transitions 0 à 1, et 1 à 0.

Ces impulsions sont appliquées, à travers les résistances R21 et R22, aux transistors 56 et 57 qui travaillent en commutation et qui, à l'aide d'un réseau de résistances R23, R24, R25 placées en série avec la diode d'émission 40, permettent d'envoyer dans cette dernière le courant à trois niveaux Io, Imin et Imax répondant aux caractéristiques précédemment indiquées. Le circuit de commutation 39 est donné à titre d'exemple, tout autre dispositif permettant d'obtenir trois niveaux de courant pourrait tout aussi bien convenir. Dans le cas du dispositif présenté, les différentes résistances doivent remplir les relations suivantes :

$$R25/R24 = 1 + k/1 - k, \quad R24/R23 = k \quad et \quad Io = Vcc - VD/R23 + R24$$

avec $k = Imax - Io/Io = Io - Imin/Io$, et $VD$ = chute de tension de la diode d'émission 40.

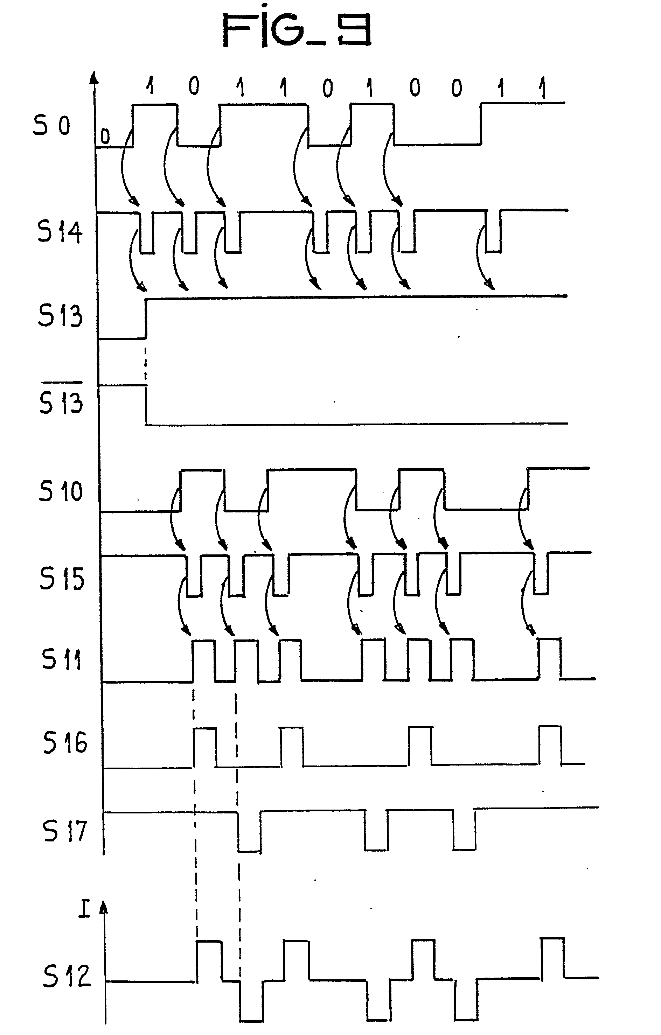

Les figures 9, 10 et 11 montrent les formes des signaux en différents points du montage de l'émetteur présenté figure 8 pour différents cas de fonctionnement.

La figure 9 détaille ces différents signaux en partant du code externe jusqu'au code interne en l'absence de rafraîchissement (cas où la période entre deux bits du code reste inférieure ou égale à TR).

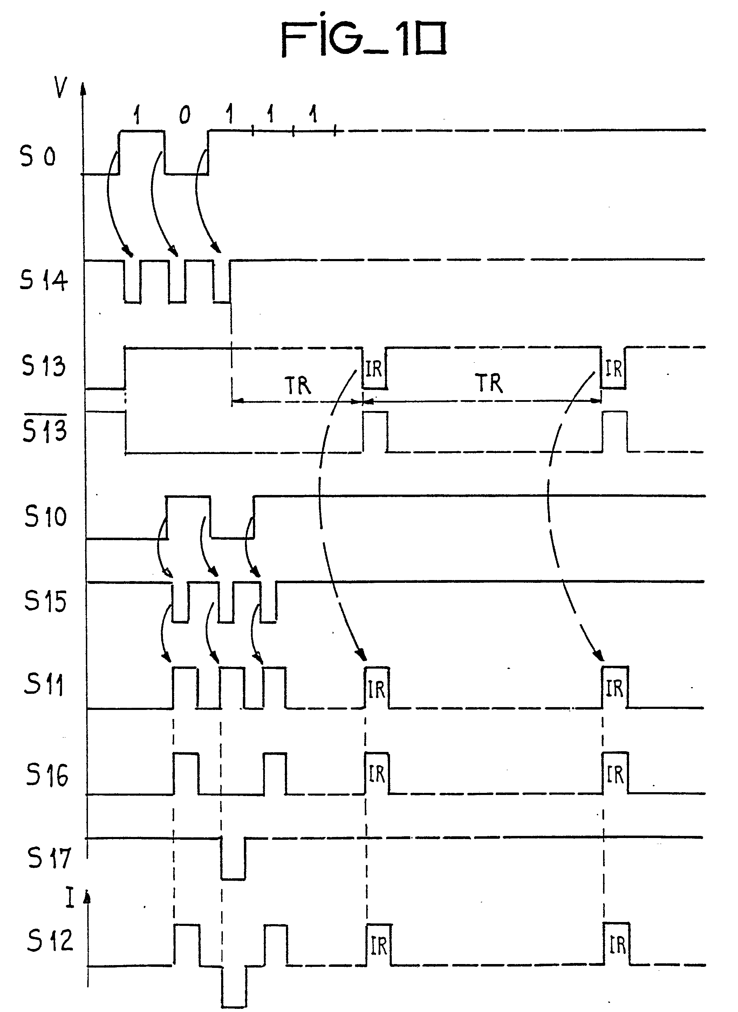

La figure 10 montre ces mêmes signaux mais avec production d'impulsions de rafraîchissement IR (cas où la période entre deux bits du code devient égale ou supérieure à TR).

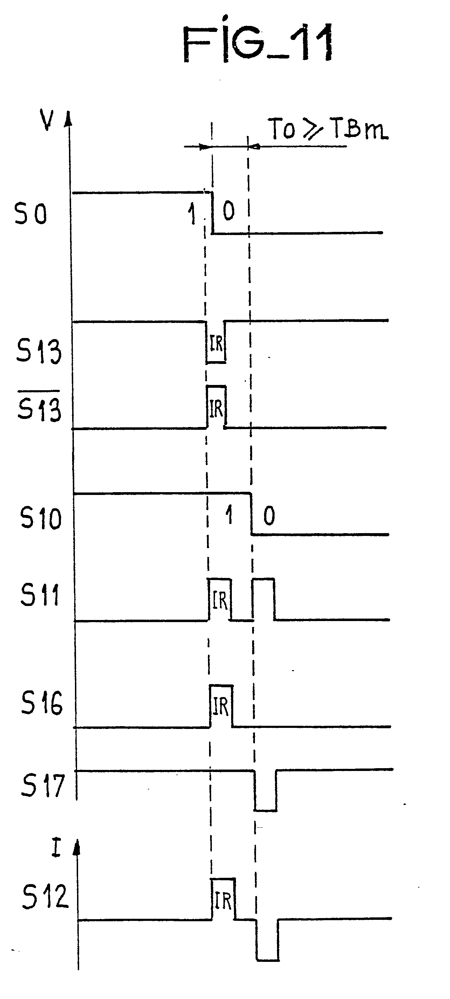

La figure 11 montre le fonctionnement de l'émetteur en présence d'un changement de code ayant lieu simultanément avec la génération d'une impulsion de rafraîchissement TR. Le retard To entre la voie code et la voie rafraîchissement permet, dans ce cas, d'éviter le chevauchement des deux impulsions.

Selon la description qui précède, le système de transmission numérique par voie optique proposé selon la présente invention, constitue une variante de réalisation de celui décrit dans la demande de brevet français Nº 81.15599 du 12 août 1981. S'agissant d'accroître la dynamique d'exploitation, la solution décrite dans cette demande antérieure est concentrée au niveau du récepteur et se traduit par l'élaboration d'un circuit générateur de seuil de plus en plus complexe ; dans la variante proposée selon la présente invention, le moyen 12 d'inhibition des effets des suroscillations dues à la modification de la fonction de transfert de la liaison optique, permet une augmentation notable de la dynamique due au fait que le rapport entre deux valeurs de référence consécutives peut être augmenté ; ce moyen permet également, pour une dynamique donnée, une simplification importante du circuit de décision. Au niveau de l'émetteur, en contrepartie, un moyen de protection 31 simple est à prévoir pour produire un retard entre la voie code et la voie rafraîchissement et éviter le chevauchement entre une impulsion de rafraîchissement et une impulsion de transition, ce chevauchement produisant un signal semblable à un signal normal avec suroscillation entraînant le fonctionnement du circuit d'inhibition du récepteur provoquant ainsi un mauvais décodage par la non-prise en compte de l'impulsion correspondant à la transition du code externe. Selon les caractéristiques prévues pour l'exploitation, on peut être amené à opter soit pour la solution antérieure, soit pour la solution présente.

**Revendications**

1. Système émetteur-récepteur de transmission numérique par voie optique et à débit variable dans lequel, l'émetteur optique (1) produit des impulsions lumineuses correspondant à un codage interne à trois niveaux et à composante continue constante de l'information, le codage comportant également l'émission périodique d'une impulsion dite de rafraîchissement lorsque le signal code reste inchangé pendant une période déterminée ; un conducteur optique à fibre (2) achemine les impulsions lumineuses vers un récepteur optique ; le récepteur comporte un étage photodétecteur (3) suivi d'un montage transimpédance (4, 5) qui alimente deux comparateurs à seuils symétriques (7, 8) et un circuit de transcodage (9) alimenté par les sorties de comparaison (S2, S3) ; le système étant caractérisé en ce que le récepteur comporte un moyen de protection contre les effets parasites de changement d'état résultat de suroscillations, ce moyen consistant en un circuit d'inhibition (12) interposé entre les comparateurs et le circuit de transcodage et qui inhibe ce dernier à la suite de chaque impulsion du code interne détectée par les comparateurs, l'inhibition étant produite pendant une durée déterminée en sorte de couvrir celle des rebondissements éventuels qui suivent l'impulsion et en ce que l'émetteur comporte un moyen de protection contre les effets de chevauchement d'une impulsion de rafraîchissement avec une transition de l'information, effets qui se traduisent par des erreurs lors du décodage, ce moyen consistant en un circuit (31) à l'entrée de l'émetteur pour produire un décalage temporel entre l'impulsion interne et celle de rafraîchissement.

2. Système selon la revendication 1, caractérisé en ce que le circuit d'inhibition (12) se compose de deux circuits monostables (26, 27) et deux circuits portes ET-NON (28, 29), la durée du monostable étant égale à celle d'inhibition (TI) et comprise entre la durée (TBi) d'impulsion de code interne et celle (TBm) minimale de bit de l'information binaire à transmettre (S0).

3. Système selon la revendication 2, caractérisé en ce qu'un premier comparateur à seuil (7) est connecté par sa sortie à une entrée de la première porte ET-NON (29) à deux entrées et au premier monostable (27), le deuxième comparateur à seuil (8) étant similairement connecté à la deuxième porte ET-NON (28) et au deuxième monostable (26), la sortie du premier monostable étant appliquée à la deuxième entrée de la deuxième porte ET-NON, et celle du deuxième monostable à la deuxième entrée de la première porte ET-NON.

4. Système selon l'une quelconque des revendications précédentes et dans lequel l'émetteur comporte, pour produire un codage dicode RZ de l'information binaire (S0) à transmettre, un premier circuit de détection de changement d'état (33) pour produire une impulsion brève lors de chaque transition de l'information, les impulsions de changement d'état étant appliquées respectivement à une voie code pour produire les impulsions dicode RZ et à une voie de rafraîchissement pour produire celles de rafraîchissement, caractérisé en ce que le circuit de protection (31) à l'entrée de l'émetteur comporte un circuit de retard (41) pour retarder l'information binaire destinée à la voie code d'une quantité au moins égale à celle minimale de bit TBm de cette information, et qu'un deuxième circuit détecteur de changement d'état (42) est prévu pour alimenter sans retard la voie rafraîchissement, le premier détecteur de changement d'état (33) n'alimentant que la voie code.

5. Système selon la revendication 4, caractérisé en ce que le circuit retard (41) est formé de cellules composées chacune d'un filtre passe-bas suivi d'un circuit trigger de Schmitt (52).

6. Système selon la revendication 4, caractérisé en ce que le circuit de retard (41) est formé par une série de circuits inverseurs logiques (52').

7. Système selon la revendication 4, caractérisé en ce que chaque voie de l'émetteur comporte un circuit monostable (36, 37) attaqué par le circuit de détection de changement d'état correspondant (33, 42) à travers un circuit porte à deux entrées (34, 35), la sortie de chaque monostable étant connectée à la deuxième entrée du circuit porte de l'autre voie, le monostable (36) de la voie code ayant une durée égale à celle d'impulsion TBi du code dicode RZ et le monostable (37) de la voie de rafraîchissement ayant une durée égale à la période de rafraîchissement, l'émetteur comportant en outre, un circuit de discrimination (38) des transitions positives et négatives alimenté par l'information retardée (S10) et par la sortie (S11) du monostable de la voie code, et qui est connecté en série avec un circuit de codage interne à trois niveaux (39) qui alimente une diode photoémettrice (40).

8. Système selon l'une quelconque des revendications précédentes et dans lequel le récepteur comporte une liaison capacitive (10) en sortie du montage transimpédance (4, 5) pour alimenter les comparateurs à seuils symétriques (7, 8) et simultanément, un générateur de seuils (11) qui permet de commuter automatiquement les seuils parmi une pluralité de valeurs discrètes prédéterminées en fonction de l'amplitude présentée par le signal (51).

**Claims**

1. Transmitter-receiver system for the digital transmission along an optical path at variable rate wherein the optical transmitter (1) produces optical pulses corresponding to an internal coding at three levels and having a constant direct information component, the coding further comprising the periodic transmision of a so-called refresh pulse when the code signal remains unchanged for a determined period ; an optical fibre conductor (2) transmitting the optical pulses to an optical receiver ; the receiver comprising a photodetector stage (3) followed by an impedance transformation stage (4, 5) feeding two symmetrical threshold comparators (7, 8) and a transcoding circuit (9) fed by the comparator outputs (S2, S3) ; the system being characterized in that the receiver comprises means for protection against parasitic state changement effects resulting from overshooting, this means consisting in an inhibit circuit (12) inserted between the comparators and the transcoding circuit and which inhibits the latter after each pulse of the internal code detected by the comparators, the inhibition being produced for a determined duration in a manner to cover that of eventual parasitic oscillations following the pulse, and in that the transmitter comprises means for protection against the effects of overlapping of a refreshing pulse with an information transition, these effects producing decoding errors, said means consisting in a circuit (31) at the input of the transmitter for producing a time shift between the internal pulse and the refresh pulse.

2. System according to claim 1, characterized in that the inhibition circuit (12) is composed of two monostable circuits (26, 27) and two NAND gate circuits (28, 29), the duration of the monostable being equal to that of the inhibition (TI) and comprised between the duration (TBi) of the internal code pulse and the minimum duration (TBm) of the binary information bit to be transmitted (S0).

3. System according to claim 2, characterized in that a first threshold comparator (7) is connected with its output to an input of the first NAND gate (29) having two inputs and to the first monostable (27), the second threshold comparator (8) being similarly conected to the second NAND gate (28) and to the second monostable (26), the output of the first monostable being applied to the second input of the second NAND gate and that of. the second monostable to the second input of the first NAND gate.

4. System according to any of the preceding claims and wherein the transmitter comprises, for producing a pulse bi-polar code of the binary information (S0) to be transmitted, a first state change detection circuit (33) for producing a short pulse upon each transition of the information, the state changing pulses being respectively applied to a code channel for producing the bi-polar code pulses and to a refresh channel for producing the refresh pulses, characterized in that the protection circuit (31) at the input of the transmitter comprises a delay circuit (41) for delaying the binary information intended for the code channel by a quantity at least equal to the minimum bit quantity TBm of this information, and that a second state changing detector circuit (42) is provided for feeding the refresh channel without delay, the first state changing detector (33) feeding only the code channel.

5. System according to claim 4, characterized in that the delay circuit (41) is formed of stages which are each composed of a low pass filter followed by a Schmitt trigger circuit (52).

6. System according to claim 4, characterized in that the delay circuit (41) is formed by a series of logic inverter circuits (52').

7. System according to claim 4, characterized in that each channel of the transmitter comprises a monostable circuit (36, 37) driven by the corresponding state changing detection circuit (33, 42) through a gate circuit (34, 35) having two inputs, the output of each monostable being connected to the second input of the gate circuit of the other channel, the monostable (36) of the code channel having a duration equal to that of the pulse TBi of the bi-polar code, and the monostable (37) of the refresh channel having a duration equal to the refresh period, the transmitter further comprising a circuit (38) for the discrimination of positive and negative transitions which is supplied with a delayed information (S10) and by the output (S11) of the monostable of the code channel, and which is connected in series with a circuit for the internal coding at three levels (39) which feeds a light-emitting diode (40).

8. System according to any of the preceding claims and wherein the receiver comprises a capacitive connection (10) at the output of the impedance transformer stage (4, 5) for feeding the symmetrical threshold comparators (7, 8), and simultaneously a threshold generator (11) permitting to switch the thresholds automatically among a plurality of discrete predetermined values as a function of the amplitude of the signal (51).

## Patentansprüche

1. Sender/Empfänger-System für die digitale Übertragung auf optischem Wege und mit variabler Übertragungsrate, bei welchem der optische Sender (1) Lichtimpulse erzeugt, die einer internen Codierung auf drei Pegeln mit konstanter Gleichkomponente der Information entsprechen, wobei die Codierung ferner das periodische Aussenden eines sogenannten Auffrischimpulses umfaßt, wenn das codierte Signal während einer bestimmten Zeitspanne unverändert bleibt ; wobei ein Lichtfaser-Leiter (2) die Lichtimpulse zu einem optischen Empfänger weiterleitet ; wobei der Empfänger eine Photodetektorstufe (3) umfaßt, auf die eine zwei symmetrische Schwellwertkomparatoren (7, 8) speisende Impedanzumsetzstufe (4, 5) und eine Umkodierschaltung (9) folgen, welche durch die Komparatorausgänge (S2, S3) gespeist wird ; wobei das System ferner dadurch gekennzeichnet ist, daß der Empfänger ein Mittel zum Schützen gegen durch Überschwingen verursachte Zustandsänderungs-Störeffekte umfaßt, wobei dieses Mittel aus einer Sperrschaltung (12) besteht, die zwischen die Komparatoren und die Codeumsetzschaltung eingefügt ist und letztere im Anschluß an jeden Impuls des internen Codes sperrt, der durch die Komparatoren festgestellt wird, wobei die Sperrung während einer bestimmten Dauer erfolgt, so daß die der eventuellen Störschwinger, die auf den Impuls folgen, überdeckt wird, und daß der Sender ein Mittel zum Schützen gegen die Auswirkungen einer Überlappung eines Auffrischimpulses mit einem Informationsübergang aufweist, wobei diese Auswirkungen zu Decodierfehlern führen und wobei dieses Mittel aus einer Schaltung (31) am Eingang des Senders besteht, um eine Zeitverschiebung zwischen dem internen Impuls und dem Auffrischimpuls herbeizuführen.

2. System nach Anspruch 1, dadurch gekennzeichnet, daß die Sperrschaltung (12) aus zwei monostabilen Schaltungen (26, 27) und aus zwei NAND-Torschaltungen (28, 29) zusammengesetzt ist, wobei die Dauer der monostabilen Schaltung gleich dere Sperrdauer (TI) ist und zwischen der Dauer (TBi) eines internen Codeimpulses und der (TBm) minimalen Dauer des zu übertragenden binären Informationsbits (S0) liegt.

3. System nach Anspruch 2, dadurch gekennzeichnet, daß ein erster Schwellwertkomparator (7) an seinem Ausgang mit einem Eingang der ersten, zwei Eingänge aufweisenden NAND-Torschaltung (29) und mit der ersten monostabilen Schaltung (27) verbunden ist, wobei der zweite Schwellwertkomparator (8) in gleicher Weise mit der zweiten NAND-Torschaltung (28) und mit der zweiten monostabilen Schaltung (26) verbunden ist, wobei ferner der Ausgang der ersten monostabilen Schaltung an den zweiten Eingang der zweiten NAND-Torschaltung und den der zweiten monostabilen Schaltung sowie den zweiten Eingang der ersten NAND-Torschaltung angelegt ist.

4. System nach einem der vorstehenden Ansprüche und bei welchem der Sender zur Erzeugung einer bipolaren Pulscodierung der zu übertragenden Information (S0) eine erste Zustandsänderungs-Detektionsschaltung (33) umfaßt, um einen kurzen Impuls bei jedem Informationsübergang zu erzeugen, wobei die Zustandsänderungsimpulse jeweils an einen Codekanal zur Erzeugung der bipolar codierten Impulse bzw. an einen Auffrischkanal engelegt werden, um die Auffrischimpulse zu erzeugen, dadurch gekennzeichnet, daß die Schutzschaltung (31) am Eingang des Senders eine Verzögerungsschaltung (41) umfaßt, um die Binärinformation, welche für den Codekanal bestimmt ist, um eine Größe zu verzögern, die wenigstens gleich der minimalen Bitgröße TBm dieser Information ist, und daß eine zweite Zustandsänderungs-Detektorschaltung (42) vorgesehen ist, um den Auffrischkanal ohne Verzögerung zu speisen, wobei der erste Zustandsänderungs-Detektor (33) nur den Codekanal speist.

5. System nach Anspruch 4, dadurch gekennzeichnet, daß die Verzögerungsschaltung (41) aus Stufen gebildet ist, die jeweils aus einem Tiefpaßfilter gefolgt von einer Schmitt-Triggerschaltung (52) zusammengesetzt sind.

6. System nach Anspruch 4, dadurch gekennzeichnet, daß die Verzögerungsschaltung (41) durch eine Reihe von logischen Inverterschaltungen (52') gebildet ist.

7. System nach Anspruch 4, dadurch gekennzeichnet, daß jeder Kanal des Senders eine monostabile Schaltung (36, 37) umfaßt, die durch die entsprechende Zustandsänderungs-Detektionsschaltung (33, 42) über eine Torschaltung (34, 35) mit zwei Eingängen angesteuert wird, wobei der Ausgang jeder monostabilen Schaltung mit dem zweiten Eingang der Torschaltung des anderen Kanals verbunden ist, die monostabile Schaltung (36) des Codekanals eine Dauer aufweist, die gleich der des Impulses TBi der bipolaren Impulscodierung ist, wobei ferner die monostabile Schaltung (37) des Auffrischkanals eine Dauer aufweist, die gleich der Auffrischperiode ist, der Sender ferner eine Schaltung (38) zur Diskriminierung der positiven und negativen Übergänge umfaßt, welche mit der verzögerten Information (S10) und durch den Ausgang (S11) der monostabilen Schaltung des Codekanals gespeist wird sowie in Reihe mit einer Schaltung zur internen Codierung auf drei Pegeln (39), welche eine Photosendediode (40) speist, geschaltet ist.

8. System nach einem der vorstehenden Ansprüche und bei welchem der Empfänger eine kapazitive Verbindung (10) am Ausgang der Impedanzumsetzstufe (4, 5) umfaßt, um die symmetrischen Schwellwertkomparatoren (7, 8) zu speisen, zugleich mit einem Schwellwertgenerator (11), der es gestattet, automatisch die Schwellwerte unter einer Mehrzahl von diskreten vorbestimmten Werten in Abhängigkeit von der Amplitude des Signals (51) umzuschalten.

# FÍG_1

# FÍG_3

FIG_2

FIG_4

FIG_5   0 073 164

FIG_7

FIG_6

Fig_8

# FIG_9

FIG_1□

# FIG_11